# EUROPÄISCHE PATENTSCHRIFT

(11) **EP 0 641 623 B1**
(45) Veröffentlichungstag und Bekanntmachung des Hinweises auf die Patenterteilung: **09.06.1999**
(21) Anmeldenummer: 94113616.0
(22) Anmeldetag: 31.08.1994
(51) Int. Cl.: B23Q 3/06, B25B 1/10

(54) **Spanneinrichtung zum Halten von Werkstücken**
Clamping device for holding workpieces
Dispositif de serrage pour tenir des pièces

(30) Priorität: 01.09.1993 DE 4329372
(43) Veröffentlichungstag der Anmeldung: 08.03.1995
(73) Patentinhaber: Schanz, Manfred, D-79650 Schopfheim (DE)
(72) Erfinder: Schanz, Manfred, D-79650 Schopfheim (DE)
(74) Vertreter: Schmitt, Hans, Dipl.-Ing.

(56) Entgegenhaltungen:
- EP-A- 0 362 753
- CH-A- 662 969
- DE-U- 9 007 141
- US-A- 1 924 742
- US-A- 4 046 364
- US-A- 4 625 951
- US-A- 4 864 941
- US-A- 5 031 887
- US-A- 5 121 908

## Beschreibung

Die Erfindung bezieht sich auf eine Spanneinrichtung zum Halten von Werkstücken mit wenigstens einer Spannbacke, die in Spannrichtung verstellung und dabei verschiebbar und festlegbar mit einem Trägerteil verbunden ist, wobei dieses Trägerteil Befestigungsstellen zum Verbinden mit einer Trägerplatte, zum Beispiel einer Bohrungs-Rasterplatte, oder mit einem Maschinentisch oder dergleichen Grundplatte aufweist.

Eine derartige Spanneinrichtung gemäß dem oberbegriff des unabhängigen Anspruchs 1 ist aus EP-0 362 753 A1 bekannt und hat sich bewährt. Dabei ist vorgesehen, daß Spannbacken mit einer Grundplatte oder einem Werkzeugmaschinentisch über Koordinatenbohrungen verbunden werden, die als Paßbohrungen für Positionierstifte oder Expansionsdorne ausgebildet sind und eine koordinatengerechte Befestigung ermöglichen. Bei einer Reihe von Spannaufgaben können unter anderem auch aus Platzgründen solche Spannbacken nicht oder nur schwierig eingesetzt werden.

Ferner ist aus der US-AS 031 887 eine derartige Spanneinrichtung bekannt, bei welcher ein plattenförmiges Trägerteil mit einem Langlochvorgesehen ist, welches von einer die Spannbacke erfassenden Spannschraube durchsetzt wird, die mit ihrem entgegengesetzten Ende an einem das Trägerteil untergreifenden Gegenstück befestigt ist, so daß die Spannbacke beim Anziehen der Spannschraube mit dem Trägerteil verspannbar ist. Somit läßt sich kein unmittelbarer Bezug zur Koordinaten-Z-Achse der Spanneinrichtung herstellen.

Aufgabe der vorliegenden Erfindung ist es, eine Spanneinrichtung zu schaffen, die universell auch unter beengten Platzverhältnissen einsetzbar ist. Die Spanneinrichtung soll dabei auch für praktisch beliebig geformte Werkstücke einsetzbar sein. Gleichzeitig soll eine Auflage der Spannbacke auf der Trägerplatte oder dem Maschinentisch od.dgl. Grundplatte oder auf einer darauf befindlichen Zwischenlageplatte möglich und dadurch der unmittelbare Bezug zur Koordinaten-Z-Achse herstellbar sein.

Zur Lösung dieser Aufgabe ist die eingangs genannte Spanneinrichtung dadurch gekennzeichnet, daß das Trägerteil schienenförmig ausgebildet ist, daß die Spannbacke das schienenförmige Trägerteil beidseitig übergreift und daß Spannbacken-Seitenteile in Spannstellung mit ihren Unterseiten gegen die Trägerplatte oder den Maschinentisch oder dergleichen oder gegen eine auf der Trägerplatte oder dem Maschinentisch oder dergleichen befindliche Zwischenlageplatte verspannbar sind.

Auf diese Weise ergibt sich eine Spanneinrichtung, bei welcher die Spannbacke und ihr Trägerteil eine kompakte, kleine Baueinheit bildet, die insgesamt nur die Größe der Spannbacke selbst haben kann. Auch unter sehr beengten Platzverhältnissen läßt sich eine solche Spanneinrichtung einsetzen und es kann damit ein Werkstück gegen einen Gegenanschlag oder gegen Gegenanschläge gehalten werden. Auf dem schienenförmigen Trägerteil läßt sich die Spannbacke in Längsrichtung verschieben und damit grob vorpositionieren und dann festspannen. Diese Spanneinrichtung ist auch bezüglich ihrer Lage so ausrichtbar, daß unterschiedlich geformte Werkstücke, deren Spannseiten zum Beispiel nicht in Koordinatenrichtung verlaufen oder die rund oder gerundet sind, festgespannt werden können. In vorteilhafter Weise ist dabei eine Auflage der Spannbacke auf dem Maschinentisch oder dergleichen Grundplatte vorhanden, so daß dadurch der unmittelbare Bezug zur Koordinaten-Z-Achse hergestellt wird.

In der Regel weist die Spannfläche der Spannbacke einen Auflageabsatz für das Werkstück auf, so daß das Werkstück ohne toleranzbehaftete Zwischenübertragung über mehrere Spannelementeteile bezüglich der Z-Koordinaten-Achse direkt und damit exakt positioniert ist.

Nach einer Weiterbildung der Erfindung ist vorgesehen, daß an der Spannbacke sowie dem Trägerteil formschlüssige, in Spannrichtung orientierte Führungen vorgesehen sind. Entlang dieser Führung kann die Spannbacke relativ zum Trägerteil verschoben und über diese Führungen auch in Spannlage fixiert werden. Die Führung ist dabei soweit spielbehaftet, daß eine Auflage der Spannbacke auf dem Maschinentisch oder dergleichen Unterlage erhalten bleibt.

Zweckmäßigerweise kann das schienenförmige Trägerteil im Querschnitt etwa T-förmig ausgebildet sein. Dies ermöglicht eine weitere zweckmäßige Ausgestaltung dahingehend, daß die Spannbacke mit einem das Trägerteil seitlich formschlüssig übergreifenden, verstellbaren Spannbügel verbunden sein kann, der in Spannrichtung schräg verlaufend angeordnet ist, und daß die Spannbacken-Seitenteile durch Verstellen des Spannbügels relativ zur Spannbacke gegen die Trägerplatte oder den Maschinentisch oder dergleichen verspannbar sind. Mit Hilfe des Spannbügels kann also die Spannbacke an dem schienenförmigen Trägerteil gehalten und durch Verstellen des Spannbügels relativ zur Spannbacke kann diese gegen eine Grundplatte (Maschinentisch), gegebenenfalls auch gegen das Trägerteil, verspannt werden. Gleichzeitig entsteht durch die Schrägstellung beim Verstellen (Anziehen) des Spannbügels auch eine Schiebebewegung der Spannbacke in Spannrichtung und somit eine Spannbewegung zum Festlegen des Werkstückes.

Vorzugsweise ist der Spannbügel etwa U-förmig mit an seinem freien Ende befindlichen zueinanderweisenden Untergreifvorsprüngen ausgebildet. Diese Untergreifvorsprünge untergreifen in Funktionsstellung seitlich das im Querschnitt T-förmige Trägerteil und es sind über diesen Spannbügel auch relativ hohe Spann- und Haltekräfte übertragbar.

Eine weitere zweckmäßige Ausgestaltung kann darin bestehen, daß die Spannbacke für das zu spannende Werkstück einen Auflageabsatz aufweist, dessen Höhe durch die auf der Trägerplatte, dem Maschinentisch oder dergleichen aufliegenden Seitenteile vorgegeben ist. Somit ergibt sich eine definierte Lage dieses Auflageabsatzes gegenüber dem Maschinentisch.

Zweckmäßigerweise weisen die Untergreifvorsprünge des Spannbügels sowie die von diesen untergriffenen Seitenflanken des Trägerteiles ineinander greifende Rastprofilierungen auf. Insbesondere für die Übertragung der Spannkräfte schafft die Rastprofilierung eine Verbindung zwischen Spannelement und Trägerteil.

Nach einer Ausgestaltung der Erfindung ist vorgesehen, daß bei der Spannfläche der Spannbacke eine Niederzugvorrichtung vorzugsweise mit einem in einem Aufnahmeschlitz befindlichen, etwa leistenförmigen Niederzugelement vorgesehen ist.
Die durch das Verstellen der Spannbacke auf das Werkstück zum Beispiel in X- oder Y-Richtung einwirkende Spannkraft kann dadurch auch zur exakten Positionierung des Werkstückes auf der Auflage mit herangezogen werden, so daß eine sonst von außen zusätzlich aufzubringende Positionierkraft in Z-Richtung nicht erforderlich ist.

Zweckmäßigerweise bildet die Spanneinrichtung in Verbindung mit Referenzbalken oder dergleichen als Gegenanschlägen ein Spannsystem. Durch solche Referenzbalken kann die Lage des Werkstückes in X- und/oder Y-Koordinatenrichtung bestimmt und durch einen oder mehrere Spannelemente dann das Werkstück eingespannt und festgelegt werden.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: eine teilweise geschnitten dargestellte Seitenansicht einer Spanneinrichtung,
- Fig. 2 bis 5: die zur Spanneinrichtung gehörenden Einzelteile in perspektivischer Darstellung,
- Fig. 6: eine perspektivische Darstellung einer Bohrungs-Rasterplatte mit darauf befindlichen, durch Spanneinrichtungen gehaltene Werkstücke und
- Fig. 7: eine perspektivische Darstellung eines Maschinentisches mit mehreren darauf befindlichen Spanneinrichtungen sowie einem Referenzbalken.

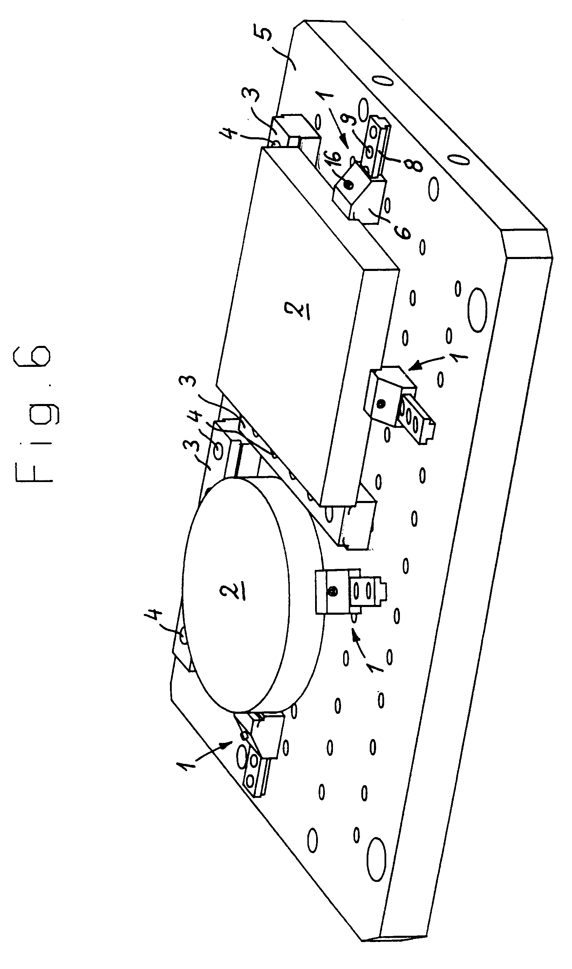

Eine in den Figuren gezeigte Spanneinrichtung 1 dient zum Halten von Werkstücken 2, wie dies gut in Figur 6 erkennbar ist. Die Spanneinrichtungen 1 dienen dabei zum Spannen der Werkstücke 2 gegen gegenüberliegende Gegenanschläge, die vorzugsweise durch sogenannte Referenzbalken 3 gebildet sind. Diese weisen Referenzbohrungen 4 zum exakten Positionieren in Koordinatenrichtung auf. Zum Verbinden der Referenzbalken 3 mit einer Trägerplatte, zum Beispiel einer Bohrungs-Rasterplatte 5 (Figur 6) können Expansionsstifte durch die Referenzbohrungen 4 und die fluchtend darunter befindlichen Bohrungen der Rasterplatte 5 gesteckt werden.

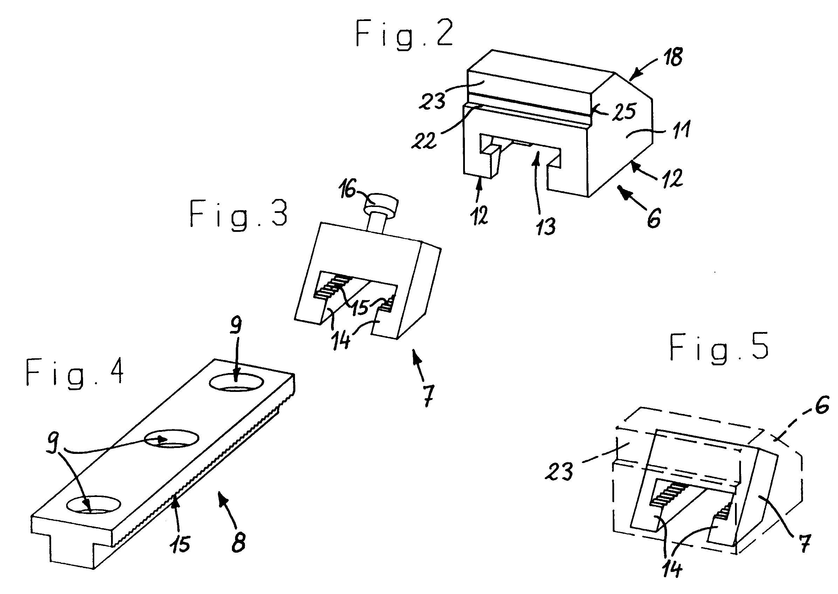

Die Spanneinrichtung besteht im wesentlichen aus den drei in Figur 2 bis 4 gezeigten Elementen.

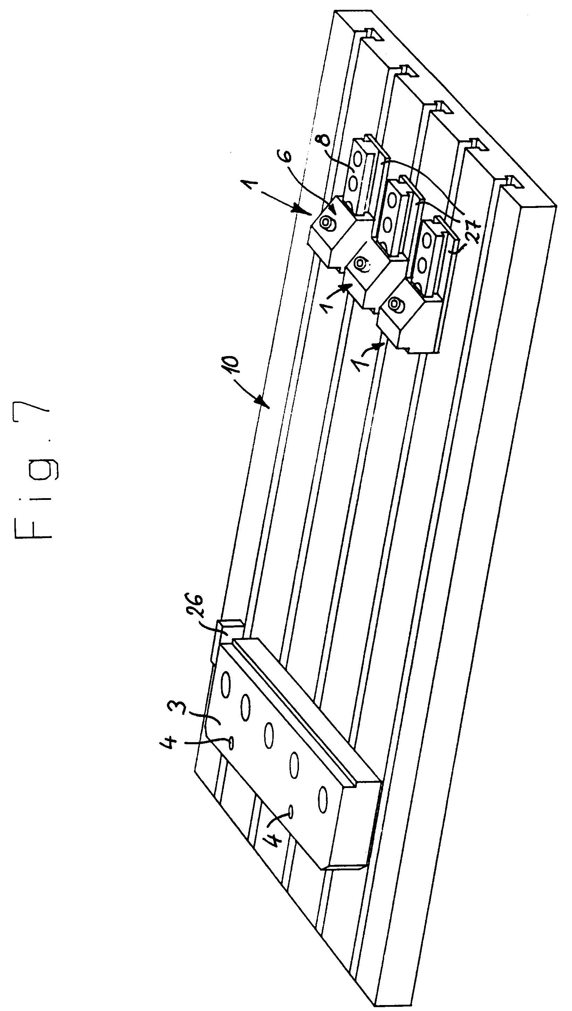

Figur 2 zeigt dabei eine perspektivische Ansicht einer Spannbacke 6, Figur 3 einen Spannbügel 7 und Figur 4 ein Trägerteil 8. Das Trägerteil 8 ist schienenförmig ausgebildet und weist im Ausführungsbeispiel einen T-förmigen Querschnitt auf. Es hat Befestigungsstellen in Form von Bohrungen 9, über die eine Befestigung mit Hilfe von Schrauben an der Rasterplatte 5 oder einer anderen Grundplatte, beispielsweise auch auf einem Maschinentisch 10 (Figur 7) möglich ist.
Im Ausführungsbeispiel sind drei Bohrungen 9 vorgesehen, weil ein vergleichsweise großer Verschiebeweg für die aufgesetzte Spannbacke 6 vorgesehen ist. Es würde prinzipiell aber auch genügen eine einzige Bohrung oder zwei Bohrungen vorzusehen. In diesem Falle könnte das Trägerteil 8 auch wesentlich kürzer, beispielsweise der Länge der Spannbacke 6 entsprechend ausgebildet sein.

Die Spannbacke 6 ist im Querschnitt etwa U-förmig ausgebildet und übergreift beidseitig das schienenförmige Trägerteil 8. In Spannstellung stützen sich die Seitenteile 11 mit ihren Unterseiten 12 auf dem Maschinentisch 10 oder der Rasterplatte 5 ab. Zur Verbreiterung dieser Auflage sind die Seitenteile 11 unterseitig nach innen eingezogen ausgebildet.

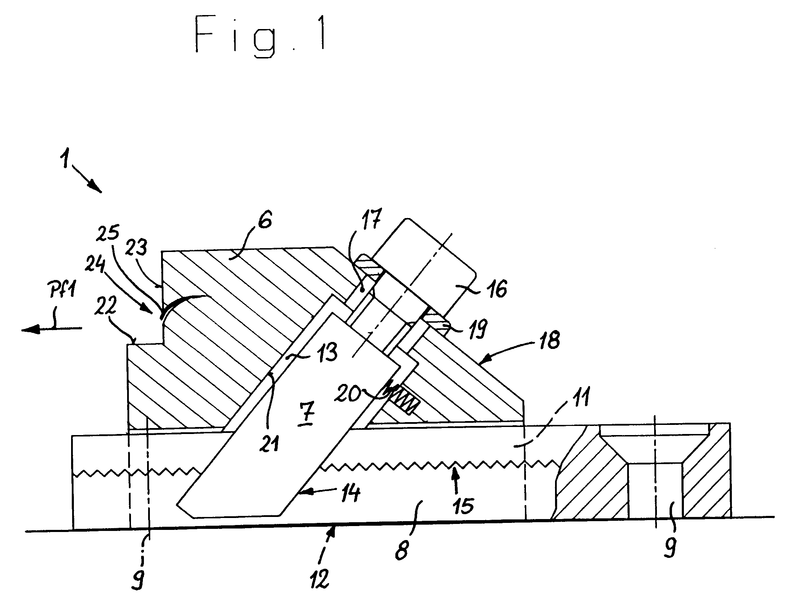

Die Spannbacke 6 weist eine schräg in Spannrichtung verlaufende Innenhöhlung 13 (vergleiche Figur 1) zur teilweisen Aufnahme des Spannbügels 7 auf. Die Lage des Spannbügels 7 innerhalb der Spannbacke 6 ist gut auch in der perspektivischen Darstellung gemäß Figur 5 erkennbar.

Der Spannbügel 7 ist etwa U-förmig mit an seinen freien Enden befindlichen, zueinander weisenden Untergreifvorsprüngen 14 ausgebildet. Diese untergreifen in Funktionsstellung (Figur 1) seitlich den T-Quersteg des Trägerteiles 8. Die Untergreifvorsprünge 14 des Spannbügels 7 sowie die von diesen untergriffenen Seitenflanken des Trägerteiles 8 weisen ineinandergreifende Rastprofilierungen 15 auf. An dem Spannbügel greift an dessen oberem Verbindungsteil mittig eine Spannschraube 16 an, die ein in der Spannbacke befindliches Langloch 17 durchgreift und sich außenseitig auf einer Schrägfläche 18 der Spannbacke 6 abstützt.

Die Innenhöhlung 13 ist in Spannrichtung so dimensioniert, daß eine Relativ-Verschiebebewegung zwischen Spannbügel 7 und Spannbacke 6 in Spannrichtung möglich ist. Auch das Langloch 17 ist entsprechend in Spannrichtung orientiert.

Zum Verschieben der Spannbacke 6 relativ zum Trägerteil 8 wird die Spannschraube 16 soweit gelockert, daß die Rastprofilierung 15 zwischen dem Trägerteil 8 und dem Spannbügel 7 außer Eingriff ist, so daß dann ein Vorpositionieren der Spannbacke 6 durch Verschieben bis an ein zu haltendes Werkstück möglich ist. Durch Anziehen der Spannschraube 6 kommt dann die Rastprofilierung 15 in Eingriff und die Spannbacke 6 wird dann durch die Beaufschlagung ihrer rückseitigen Schrägfläche 18 in Spannrichtung gemäß dem Pfeil PF 1 in Figur 1 bewegt. Durch die vorhandenen Platzverhältnisse innerhalb der Innenhöhlung 13 und dem Langloch 17 kann eine Relativverschiebe-Bewegung zwischen der Spannbacke 6 und dem Spannbügel 7 sowie der Spannschraube 16 erfolgen. Im Auflagebereich der Spannschraube 16 auf der Schrägfläche 18 wird die dabei auftretende Gleitbewegung durch eine gleitfähige Unterlagscheibe 19 begünstigt.

Im Ausführungsbeispiel ist eine Schräglage des Spannbügels 7 und dergleichen von etwa 45 Grad zur Unterlage vorgesehen. Auch die Rastprofilierung weist vorzugsweise Profilierungsflanken mit entsprechendem Schrägwinkel auf. Bei dieser Schräglage werden die beim Spannen in die Spannbacke 6 eingeleiteten Kräfte etwa in gleichem Maße in Spannrichtung einerseits und in Auflagerichtung andererseits aufgeteilt.

Anstatt einer Seitenverschiebung relativ zwischen Spannbügel und Spannbacke 6 könnte auch eine Kippbewegung vorgesehen sein. In diesem Falle wäre der Spannbügel 7 bei der Rastprofilierung 15 schwenkbar gelagert und bei der Auflage der Spannschraube 16 auf der Schrägfläche 18 wäre eine ballig geformte Zwischenlage erforderlich.
In Figur 1 ist zur Rückstellung des Spannbügels 7 etwa in Spannvorschubrichtung eine Feder 20 vorgesehen. Bei gelöster Spannschraube 16 wird dadurch der Spannbügel 7 an die vordere Innenseite 21 der Innenhöhlung 13 geschoben, so daß für einen Spannvorgang auf der anderen Seite entsprechend Platz vorhanden ist.

Die Spannbacke 6 weist einen Auflageabsatz 22 für das zu spannende Werkstück auf wobei die Höhe dieses Auflageabsatzes 22 fest durch die auf dem Maschinentisch 10 oder dergleichen aufliegenden Seitenteile 11 vorgegeben ist.

Bei der Spannfläche 23 der Spannbacke 6 ist noch eine Niederzugvorrichtung 24 angedeutet, die durch das Werkstück beim Spannen gegen den Auflageabsatz 22 gedrückt wird. Im gezeigten Ausführungsbeispiel weist die Niederzugvorrichtung 24 ein in einem Aufnahmeschlitz befindliches, etwa leistenförmiges Niederzugelement 25 auf, welches bei Beaufschlagung durch ein Werkstück mit seinem vorderen Ende nach unten schwenkt und dann in Spann-Endstellung sich in einem darunter befindlichen Freiraum befindet. In dieser Spannendlage liegt dann das Werkstück nur noch an der Spannfläche 23 sowie dem Auflageabsatz 22 an.

Gemäß Figur 6 sind die beiden dort gezeigten Werkstücke 2 mit Hilfe der erfindungsgemäßen Spanneinrichtungen 1 gegen leistenförmige Referenzbalken 3 gespannt. Diese bilden Koordinaten-gerechte Anschläge, so daß die Werkstücke 2 ohne aufwendiges Einmessen exakt positioniert sind.

Bei dem runden Werkstück 2 ist gut auch erkennbar, daß die erfindungsgemäßen Spanneinrichtungen auch schräg angeordnet werden können.

Figur 7 zeigt schließlich noch einen Maschinentisch 10, auf dem ein hier nicht gezeigtes Werkstück gegen einen Referenzbalken 3 mit einem Seitenanschlag 26 mit Hilfe von drei Spanneinrichtungen 1 eingespannt werden kann. Die Spanneinrichtungen 1 können dabei auch Werkstücke mit an der Spannseite stufenförmig verlaufenden Seitenflächen einspannen. Dementsprechend können die Spanneinrichtungen insgesamt auf dem Maschinentisch 10 verschoben und dann in unterschiedlichen Lagen festgelegt werden. Im gezeigten Ausführungsbeispiel sind hier unterhalb der Spanneinrichtungen 1 noch Zwischenlageplatten 27 vorgesehen. Die Trägerteile 8 der Spanneinrichtungen 1 sind hier in den Längsnuten des Maschinentisches 10 befestigt.

## Patentansprüche

1. Spanneinrichtung (1) zum Halten von Werkstücken (2) mit wenigstens einer Spannbacke (6), die in Spannrichtung verstellbar und dabei verschiebbar und festlegbar mit einem Trägerteil (8) verbunden ist, wobei dieses Trägerteil (8) Befestigungsstellen (9) zum Verbinden mit einer Trägerplatte, z.B. einer Bohrungs-Rasterplatte (5), oder mit einem Maschinentisch (10) oder dergleichen Grundplatte aufweist, **dadurch gekennzeichnet**, daß das Trägerteil (8) schienenförmig ausgebildet ist, daß die Spannbacke (6) das schienenförmige Trägerteil (8) beidseitig übergreift und daß Spannbacken-Seitenteile (11) in Spannstellung mit ihren Unterseiten (12) gegen die Trägerplatte oder den Maschinentisch (10) oder dergleichen oder gegen eine auf der Trägerplatte oder dem Maschinentisch (10) oder dergleichen befindliche Zwischenlageplatte (27) verspannbar sind.

2. Spanneinrichtung nach Anspruch 1, dadurch gekennzeichnet, daß an der Spannbacke (6) sowie dem Trägerteil (8) formschlüssige, in Spannrichtung orientierte Führungen vorgesehen sind.

3. Spanneinrichtung nach Anspruch 1 oder 2, dadurch gekennzeichnet, daß das schienenförmige Trägerteil (8) im Querschnitt etwa T-förmig ausgebildet ist.

4. Spanneinrichtung nach einem der Ansprüche 1 bis 3, dadurch gekennzeichnet, daß die Spannbacke (6) mit einem das Trägerteil (8) seitlich formschlüssig übergreifenden, verstellbaren Spannbügel (7) verbunden ist, der in Spannrichtung schräg verlaufend angeordnet ist und daß die Spannbacken-Seitenteile (11) durch Verstellen des Spannbügels (7) relativ zur Spannbacke (6) gegen die Trägerplatte oder den Maschinentisch (10) oder dergleichen verspannbar sind.

5. Spanneinrichtung nach Anspruch 4, dadurch gekennzeichnet, daß der Spannbügel (7) etwa U-förmig mit an seinen freien Enden befindlichen zueinanderweisenden Untergreifvorsprüngen (14) ausgebildet ist.

6. Spanneinrichtung nach einem der Ansprüche 1 bis 5, dadurch gekennzeichnet, daß die Spannbacke (6) für das zu spannende Werkstück (2) einen Auflageabsatz (22) aufweist, dessen Höhe durch die auf der Trägerplatte, dem Maschinentisch (10) oder dergleichen aufliegenden Seitenteile (11) vorgegeben ist.

7. Spanneinrichtung nach Anspruch 5 oder 6, dadurch gekennzeichnet, daß die Untergreifvorsprünge (14) des Spannbügels (7) sowie die von diesen untergriffenen Seitenflanken des Trägerteiles (8) ineinandergreifende Rastprofilierungen (15) aufweisen.

8. Spanneinrichtung nach einem der Ansprüchen 1 bis 7, dadurch gekennzeichnet, daß das Trägerteil (8) als Befestigungsstelle(n) wenigstens eine Bohrung (9) für eine Befestigungsschraube aufweist.

9. Spanneinrichtung nach einem der Ansprüche 1 bis 8, dadurch gekennzeichnet, daß das Trägerteil (8) eine geringere Breite als die Spannbacke (6) hat und daß die Länge des Trägerteiles (8) vorzugsweise etwa der der Spannbacke (6) entspricht.

10. Spanneinrichtung nach einem der Ansprüche 4 bis 9, dadurch gekennzeichnet, daß die Spannbacke (6) eine zum Trägerteil (8) hin offene Innenhöhlung (13) zur teilweisen Aufnahme des Spannbügels (7) aufweist, daß diese Innenhöhlung in Spannrichtung schräg mit seinem dem Trägerteil (8) zugewandten Ende näher an der Spannbacken-Vorderseite befindlich angeordnet ist und daß der Spannbügel (7) über eine, sich auf einer etwa rechtwinklig zum Verlauf des Spannbügels angeordneten Schrägfläche (18) der Spannbacke (6) abstützenden Spannschraube (16) mit der Spannbacke (6) verbunden ist.

11. Spanneinrichtung nach Anspruch 10, dadurch gekennzeichnet, daß die Innenhöhlung (13) der Spannbacke (6) in Spannrichtung größer ist als der darin befindliche Spannbügel (7) und daß für den Durchtritt der Spannschraube (16) durch die Spannbacke (6) ein in Spannrichtung orientiertes Langloch (17) vorgesehen ist.

12. Spanneinrichtung nach Anspruch 10 oder 11, dadurch gekennzeichnet, daß die Spannschraube (16) am U-Verbindungssteg des Spannbügels (7) angreift und sich außenseitig an der Spannbacke (6) insbesondere an deren Schrägfläche (18) abstützt.

13. Spanneinrichtung nach einem der Ansprüche 1 bis 12, dadurch gekennzeichnet, daß sie in Verbindung mit Referenzbalken (3) als Gegenanschlägen ein Spannsystem bildet.

14. Spanneinrichtung nach einem der Ansprüche 4 bis 13, dadurch gekennzeichnet, daß der in der Spannbacke (6) befindliche Spannbügel (7) etwa in Spannvorschubrichtung der Spannbacke seitlich druckbeaufschlagt ist, und daß dazu insbesondere wenigstens ein in eine quer zur Innenhöhlung (13) für den Spannbügel angeordnete Druckfeder (20) oder ein gefedertes Druckstück oder dergleichen vorgesehen ist.

15. Spanneinrichtung nach einem der Ansprüche 1 bis 13, dadurch gekennzeichnet, daß bei der Spannfläche (23) der Spannbacke (6) eine Niederzugvorrichtung (24) vorzugsweise mit einem in einem Aufnahmeschlitz befindlichen, etwa leistenförmigen Niederzugelement (25) vorgesehen ist.

16. Spanneinrichtung nach einem der Ansprüche 6 bis 15, dadurch gekennzeichnet, daß der in der Spannbacke (6) vorgesehene Aufnahmeschlitz bei der Spannfläche (18) eine schräg zur Werkstück-Auflage (22) weisende Austrittsrichtung aufweist, daß in Abschwenkrichtung des Niederzugelementes (25) benachbart zu diesem ein Freiraum, zumindest zur Aufnahme des in unbelasteter Lage über die Spannbacken-Spannfläche vorstehenden Teiles des Niederzugelementes (25) vorgesehen ist und daß die Schlitzweite im Bereich der Spannfläche zur Bildung des Bewegungs-Freiraumes für das spannflächenseitige Ende des Niederzugelementes größer ist als im rückwärtigen Lagerbereich.

## Claims

1. Clamping device (1) for holding workpieces (2) with at least one clamping jaw (6) which can be adjusted in the clamping direction and which is thereby displaceably and fixedly connected to a supporting part (8), whereby this supporting part (8) comprises mounting points (9) for connecting to a supporting plate, e.g. a drilling screen (5), or to a machine table (10) or the like base plate, characterised in that the supporting part (8) is formed in the shape of a rail, that the clamping jaw (6) engages over the rail-shaped supporting part (8) on both sides and that clamping jaw side parts (11) can be braced in the clamping position with their undersides (12) against the supporting plate or the machine table (10) or the like or against an intermediate layer plate (27) which is present on the supporting plate or the machine table (10) or the like.

2. Clamping device according to claim 1, characterised in that interlocking guides which are oriented in the clamping direction are provided at the clamping jaw (6) and at the supporting part (8).

3. Clamping device according to claim 1 or 2, characterised in that the rail-shaped supporting part (8) is approximately formed T-shaped in its cross section.

4. Clamping device according to one of claims 1 to 3, characterised in that the clamping jaw (6) is connected to an adjustable clamping clip (7) which spans the supporting part (8) laterally in an interlocking manner, which is arranged in an oblique way in the clamping direction, and that the clamping jaw side parts (11) can be braced by displacing the clamping clip (7) relative to the clamping jaw (6) against the supporting plate or the machine table (10) or the like.

5. Clamping device according to claim 4, characterised in that the clamping clip (7) is approximately U-shaped with gripping projections (14) which are located at its free ends and point towards one another.

6. Clamping device according to one of claims 1 to 5, characterised in that the clamping jaw (6) for the workpiece (2) to be clamped comprises a support ledge (22), the height of which is given by the side parts (11) which lie on the supporting plate, the machine table (10) or the like.

7. Clamping device according to claim 5 or 6, characterised in that the gripping projections (14) of the clamping clip (7) and the side flanks of the supporting part (8) which are gripped from underneath by these comprise interlocking locating profiles (15).

8. Clamping device according to one of claims 1 to 7, characterised in that the supporting part (8) comprises at least one bore (9) for a mounting screw as mounting point(s).

9. Clamping device according to one of claims 1 to 8, characterised in that the supporting part (8) has a smaller width than the clamping jaw (6) and that the length of the supporting part (8) preferably corresponds approximately to that of the lamping jaw (6).

10. Clamping device according to one of claims 4 to 9, characterised in that the clamping jaw (6) comprises an inner cavity (13) which is open toward the supporting part (8) for partially receiving the clamping clip (7), that this inner cavity is arranged in the clamping direction in an oblique way with its end facing the supporting part (8) nearer to the front part of the clamping jaw, and that the clamping clip (7) is connected to the clamping jaw (6) via a clamping screw (16) which is supported on an oblique face (18) of the clamping jaw (6) which is approximately at a right angle to the course of the clamping clip.

11. Clamping device according to claim 10, characterised in that the inner cavity (13) of the clamping jaw (6) is larger in the clamping direction than the clamping clip (7) arranged therein, and that a longitudinal hole (17) is provided for the passage of the clamping screw (16) through the clamping jaw (6), which is oriented in the clamping direction.

12. Clamping device according to claim 10 or 11, characterised in that the clamping screw (16) engages the U-shaped connecting bar of the clamping clip (7) and bears against the clamping jaw (6) at the outside, in particular at its oblique face (18).

13. Clamping device according to one of claims 1 to 12, characterised in that it forms a clamping system in connection with reference beams (3) which serve as counter stops.

14. Clamping device according to one of claims 4 to 13, characterised in that the clamping clip (7) in the clamping jaw (6) is acted upon with pressure approximately in the clamping feeding direction of the clamping jaw at the side thereof, and that in particular at least one compression spring (20) or a flexible pressure piece or the like is provided for this for the clamping clip in a transverse direction to the inner cavity (13).

15. Clamping device according to one of claims 1 to 13, characterised in that a drawing-down apparatus (24) preferably with an approximately ledge-shaped drawing-down element (25), which is in a receiving slot, is provided at the clamping face (23) of the clamping jaw (6).

16. Clamping device according to one of claims 6 to 15, characterised in that the receiver slot which is provided in the clamping jaw (6) comprises an exit direction at the clamping face (18) which is oblique with regard to the workpiece holder (22), that a clearance is provided in the swivel-down direction of the drawing-down element (25) next thereto, at least for receiving the parts of the drawing-down element (25) which project in their non-loaded position over the clamping face of the clamping jaw, and that the slot width in the region of the clamping face for forming the clearance for movement for the end of the drawing-down element at the clamping face side is larger than in the rearward bearing region.

## Revendications

1. Dispositif de serrage (1) pour tenir des pièces (2), avec au moins une mâchoire de serrage (6) qui est raccordée à une pièce de support (8) de manière réglable, et en même temps déplaçable et de manière à pouvoir être fixée, dans le sens de serrage, cette pièce de support (8) présentant des points de fixation (9) pour le raccordement à une plaque-support, p. ex. à une plaque à grille avec trous (5) ou à une table de machine-outil (10) ou à une plaque de base similaire, **caractérisé en ce que** la pièce de support (8) est formée en forme de rail, que la mâchoire de serrage (6) a prise sur la pièce de support (8) en forme de rat des deux côtés et que des parties latérales (11) de la mâchoire de serrage peuvent, en position de serrage, être serrées avec leurs côtés inférieurs (12) contre la plaque-support ou la table de machine-outil (10) ou la plaque similaire ou contre une plaque intercalaire (27) située sur la plaque-support ou la table de machine-outil (10) ou la plaque similaire.

2. Dispositif de serrage selon la revendication 1, **caractérisé en ce que** des glissières de guidage à engagement positif et orientées dans le sens de serrage sont prévues sur la mâchoire de serrage (6) ainsi que sur la pièce de support (8).

3. Dispositif de serrage selon la revendication 1 ou 2, **caractérisé en ce que** la pièce de support (8) en forme de rail est formée avec une section à peu prés en forme de T.

4. Dispositif de serrage selon l'une des revendications 1 à 3, **caractérisé en ce que** la mâchoire de serrage (6) est raccordée à une bride de fixation (7) réglable, à engagement positif et ayant prise latéralement sur la pièce de support (8), cette bride de fixation étant disposée obliquement dans le sens de serrage et en ce que les parties latérales (11) de la mâchoire de serrage sont serrables contre la plaque-support ou la table de machine-outil (10) ou la plaque similaire par réglage de la bride de fixation (7) de manière relative par rapport à la mâchoire de serrage (6).

5. Dispositif de serrage selon la revendication 4, **caractérisé en ce que** la bride de fixation (7) est formée à peu prés en forme de U avec des saillies de prise inférieure (14) dirigées l'une vers autre et situées sur ses extrémités libres.

6. Dispositif de serrage selon l'une des revendications 1 à 5, **caractérisé en ce que** la mâchoire de serrage (6) présente un rebord d'appui (22) pour la pièce à serrer (2), dont la hauteur est donnée par les parties latérales (11) reposant sur la plaque de support, la table de machine-outil (10) ou la plaque similaire.

7. Dispositif de serrage selon la revendication 5 ou 6, **caractérisé en ce que** les saillies de prise inférieure (14) de la bride de fixation (7) ainsi que les flancs latéraux de la pièce de support (8) pris par le dessous présentent des profilages à crans d'arrêt (15) s'emboîtant les uns dans les autres.

8. Dispositif de serrage selon l'une des revendications 1 à 7, **caractérisé en ce que** la pièce de support (8) présente au moins un trou (9) pour une vis de fixation comme point(s) de fixation.

9. Dispositif de serrage selon l'une des revendications 1 à 8, **caractérisé en ce que** la pièce de support (8) a une largeur inférieure à la mâchoire de serrage (6) et que la longueur de la pièce de support (8) correspond de préférence à peu près à celle de la mâchoire de serrage (6).

10. Dispositif de serrage selon l'une des revendications 4 à 9, **caractérisé en ce que** la mâchoire de serrage (6) présente une cavité intérieure (13) ouverte en direction de la pièce de support (8) pour le logement partiel de la bride de fixation (7), que cette cavité intérieure est, avec son extrémité dirigée du côté de la pièce de support (8), disposée de manière oblique dans le sens de serrage et se trouve plus près du côté avant de la mâchoire de serrage (6) et que la bride de fixation (7) est raccordée à la mâchoire de serrage (6) par l'intermédiaire d'une vis de serrage (16) s'appuyant sur une surface oblique (18) de la mâchoire de serrage (6) disposée à peu près perpendiculairement à l'allure de la bride de fixation.

11. Dispositif de serrage selon la revendication 10, **caractérisé en ce que** la cavité intérieure (13) de la mâchoire de serrage (6) est, dans le sens de serrage, plus grande que la bride de fixation (7) s'y trouvant et qu'un trou longitudinal (17) orienté dans le sens de serrage est prévu pour le passage de la vis de serrage (16) à travers la mâchoire de serrage (6).

12. Dispositif de serrage selon la revendication 10 ou 11, **caractérisé en ce que** la vis de serrage (16) a prise sur la nervure de raccordement en U de la bride de fixation (7) et qu'elle s'appuie sur les côtés extérieurs de la mâchoire de serrage (6), notamment sur la surface oblique (18) de celle-ci.

13. Dispositif de serrage selon l'une des revendications 1 à 12, **caractérisé en ce que** ce dispositif de serrage forme un système de serrage en relation avec des barres de référence (3) utilisées comme contre-butées.

14. Dispositif de serrage selon l'une des revendications 4 à 13, **caractérisé en ce que** la bride de fixation (7) se trouvant dans la mâchoire de serrage (6) est mise sous pression latéralement à peu près dans le sens d'avancement de serrage de la mâchoire de serrage et que pour cela notamment au moins un ressort de pression (20) placé transversalement par rapport à la cavité intérieure (13) ou une pièce de pression à ressort ou une pièce similaire est prévu(e) pour la bride de fixation.

15. Dispositif de serrage selon l'une des revendications 1 à 13, **caractérisé en ce** qu un dispositif à faible traction (24) est prévu pour la surface de serrage (23) de la mâchoire de serrage (6), de préférence avec un élément de faible traction (25) à peu près en forme de baguette se trouvant dans une fente de logement.

16. Dispositif de serrage selon l'une des revendications 6 à 15, **caractérisé en ce que** la fente de logement prévue dans la mâchoire de serrage (6) présente, pour la surface de serrage (18), une direction de sortie dirigée obliquement par rapport à l'appui (22) de pièce, en ce que, dans le sens de pivotement de l'élément à faible traction (25) et adjacent à celui-ci, un espace libre est prévu au moins pour le logement de la partie de l'élément à faible traction (25) dépassant au-delà de la surface de serrage de la mâchoire de serrage en position non chargée et en ce que la largeur de la fente, dans la partie de la surface de serrage, est plus grande que dans la partie arrière du palier pour la formation de l'espace libre de mouvement pour l'extrémité de l'élément à faible traction situé du côté de la surface de serrage.
